Europäisches Patentamt

European Patent Office

Office européen des brevets

(11) Veröffentlichungsnummer: **0 130 290**
**A1**

(12) **EUROPÄISCHE PATENTANMELDUNG**

(21) Anmeldenummer: **84103886.2**

(22) Anmeldetag: **07.04.84**

(51) Int. Cl.⁴: **G 01 C 21/22,** G 09 B 29/10

(30) Priorität: **27.05.83 DE 3319207**

(43) Veröffentlichungstag der Anmeldung: **09.01.85**
**Patentblatt 85/2**

(84) Benannte Vertragsstaaten: **DE FR GB IT**

(71) Anmelder: **VDO Adolf Schindling AG, Gräfstrasse 103,**
**D-6000 Frankfurt/Main (DE)**

(72) Erfinder: **Angermüller, Helmut, Dr., Raimundstrasse 100,**
**D-6000 Frankfurt/M. 1 (DE)**
Erfinder: **Presse, Joachim, Niddagaustrasse 13,**
**D-6000 Frankfurt/M. 90 (DE)**
Erfinder: **Hahlganss, Günter, Breslauer Strasse 29,**
**D-6239 Kriftel (DE)**

(74) Vertreter: **Könekamp, Herbert, Dipl.-Ing. et al, Sodener**
**Strasse 9, D-6231 Schwalbach (DE)**

(54) **Navigationseinrichtung.**

(57) Die Anmeldung betrifft eine Navigationseinrichtung für Fahrzeuge, mit einer Eingabeeinheit (1) zur Eingabe von Eingabedaten, über die ein bestimmtes Fahrziel mit seinen relativen Zielkoordinaten gegenüber dem Ausgangsort des Fahrzeugs eingebbar und zur Bildung eines Zielvektors auswertbar ist. Weiterhin ist eine Ausgabeeinrichtung vorhanden, die der momentan jeweils gültige Zielvektor nach Betrag und Richtung anzeigbar ist. Die in die Eingabeeinheit (1) eingegebenen Eingabedaten, sind von der Ausgabeeinrichtung anzeigbar.

VDO Adolf Schindling AG      - 1 -      Gräfstraße 103
6000 Frankfurt/Main

G-R Kl-do
1713
19. Mai 1983

## Navigationseinrichtung

Die Erfindung betrifft eine Navigationseinrichtung für Fahrzeuge, insbesondere für Straßenfahrzeuge, mit einer Eingabeeinheit zur Eingabe von Eingabedaten, über die ein bestimmtes Fahrtziel mit seinen relativen Zielkoordinaten gegenüber dem Ausgangsort des Fahrzeugs eingebbar und zur Bildung eines Zielvektors auswertbar ist, und mit einer Ausgabeeinrichtung, durch die der momentan jeweils gültige Zielvektor nach Betrag und Richtung anzeigbar ist.

Eine derartige bekannte Navigationseinrichtung besitzt als Eingabeeinheit ein Tastenfeld, welches u.a. Tasten für die X- und die Y-Koordinate sowie für die Ziffern 0 bis 9 aufweist. Die Ausgabeeinheit besteht aus einem Rundinstrument mit einem Zeiger zur Anzeige der Richtung und einer Digitalanzeige zur Anzeige des Betrages des Zielvektors.

Diese Navigationseinrichtung ist durch die Vielzahl an Tasten in ihrer Betätigung umständlich und birgt dadurch die Gefahr von fehlerhaften Eingaben in sich. Eine Kontrolle auf korrekte Eingabe ist aber nicht möglich, da ausschließlich die Angaben über den Zielvektor nach Betrag und Richtung anzeigbar sind.

Aufgabe der Erfindung ist es daher, eine Navigationseinrichtung nach dem Oberbegriff zu schaffen, die bei einfacher sicherer Betätigung umfassende Navigationsinformationen liefert.

Diese Aufgabe wird erfindungsgemäß dadurch gelöst, daß die in die Eingabeeinheit eingegebenen Eingabedaten von der Ausgabeeinrichtung anzeigbar sind. Damit ist immer ein Überblick über die Eingabedaten gegeben.

Dabei können zur Kontrolle der richtigen Dateneingabe die Eingabedaten sowohl während der Dateneingabe als auch später auf Abruf anzeigbar sein.

Leicht erfaßbar ist die Anzeige, wenn die Beträge der Eingabedaten von einer Digitalanzeige anzeigbar sind.

Sowohl zur Erhöhung der Übersichtlichkeit als auch zur Einsparung an Bauteilen dient es, wenn die Beträge der Eingabedaten und der Betrag des Zielvektors durch dieselbe Digitalanzeige anzeigbar sind. Damit erfüllt die Digitalanzeige eine Mehrfachfunktion.

Desgleichen leicht ablesbar und erfaßbar ist es, wenn die Richtungen der Eingabedaten von einer 360°-Richtungsanzeige anzeigbar sind.

Auch hier führt es$^{zu}$ einer platz- und bauteilsparenden Ausbildung großer Übersichtlichkeit, wenn die Richtungen der Eingabedaten und die Richtung des Zielvektors durch dieselbe 360°-Richtungsanzeige anzeigbar sind.

Die Funktion einer Mehrfachanzeige kann dadurch erreicht werden, daß als Eingabedaten die Beträge der Zielkoordinaten und/oder der Deklinationswinkel anzeigbar sind. Darüber hinaus können zusätzlich noch die momentanen Koordinatenwerte anzeigbar sein.

Durch die Richtungsanzeige können in Mehrfachfunktion als Eingabedaten die Richtungen der Zielkoordinaten und/oder Deklinationswinkel anzeigbar sein. Auch hier kann die momentane Fahrtrichtung in weiterer Funktion angezeigt werden.

Auf die Verwendung einer aufwendigen Tasteneingabe mit Tasten für die Ziffern 0 bis 9 kann verzichtet werden, wenn die Eingabedaten im scroll-modus-Verfahren in die Eingabeeinheit eingebbar und von der Ausgabeeinrichtung anzeigbar sind.

Nur wenige Tasten sind dabei erforderlich, wenn die Eingabeeinheit vier den Haupthimmelsrichtungen zugeordnete Richtungstasten aufweist, durch die der Betrag der jeweils zugeordneten Koordinate eingebbar ist.

Dabei wird die Bedienbarkeit dadurch noch weiter vereinfacht, daß die Richtungstasten windrosenartig zueinander angeordnet sind.

Damit bei der Eingabe der Koordinatenwerte keine Verwechslung der jeweils dazugehörenden Himmelsrichtungen erfolgt, kann zum gleichzeitigen Kontrollieren der Himmelsrichtung durch Betätigung einer Richtungstaste die entsprechende Himmelsrichtung der Richtungsanzeige anzeigbar sein. Dies ist z.B. durch Aufleuchten der jeweiligen Himmelsrichtungsbezeichnung oder aber durch die Richtungsanzeige möglich.

Ist bei Betätigung einer Richtungstaste der entsprechende momentane Koordinatenbetrag von der Ausgabeeinrichtung anzeigbar und nach einer bestimmten Zeit die scroll-modus-Einrichtung einschaltbar, so kann dieselbe Taste in Mehrfachfunktion sowohl zum Überprüfen der eingegebenen Daten als auch zum Ändern bzw. neu Eingeben von Daten benutzt werden.

Die Eingabeeinheit kann eine Löschtaste zum Löschen der Eingabedaten aufweisen. Dabei kann auf ein spezielles Tastenelement verzichtet werden, wenn die Löschtaste durch zwei gleichzeitig betätigte Richtungstasten gebildet ist.

Zur Eingabe des ebenfalls an der Anzeigeeinheit mit Richtung und Betrag anzeigbaren Deklinationswinkels kann die Eingabeeinheit eine Deklinationstaste aufweisen, durch die der Deklinationswinkel einstellbar ist.

Zu zweifacher Funktion, nämlich zum Überprüfen wie auch zum neu Eingeben, kann die Deklinationstaste benutzt werden, wenn bei Betätigung der Deklinationstaste der momentan eingestellte Deklinatiosnwinkel von der Ausgabeeinrichtung anzeigbar und nach einer bestimmten Zeit die scroll-modus-Einrichtung einschaltbar ist.

Um bei Nichtbetätigung einer der Tasten grundsätzlich immer die Anzeige des Zielvektors zu haben, kann nach Beendigung der Betätigung der Richtungstasten und/oder der Deklinationstaste die Anzeigeeinrichtung selbsttätig auf die Anzeige des Zielvektors umschaltbar sein.

Weist die Eingabeeinheit eine Korrekturtaste auf, durch die die Momentankoordinaten von den Zielkoordinaten ersetzbar sind, so kann nach Erreichen des Ziels ein möglicherweise vorhandener Navigationsfehler eliminiert werden, was besonders von Vorteil ist, wenn in einem Speicher die Koordinaten mehrerer Ziele gespeichert sind. Das nächste Ziel kann damit wieder von richtigen Startdaten ausgehend angesteuert werden.

Um zwischendurch eine Anzeige der momentanen Fahrtrichtung in Orientierung an den Himmelsrichtungen ablesen zu können, kann die Eingabeeinheit eine Umschalttaste aufweisen, durch die die Richtungsanzeige vom Zielvektor auf die momentane Fahrtrichtung und umgekehrt umschaltbar ist.

Ein Ausführungsbeispiel der Erfindung ist in der Zeichnung dargestellt und wird im folgenden näher beschrieben. Es zeigen

Figur 1    eine erfindungsgemäße Eingabeeinheit
Figur 2    eine erfindungsgemäße Ausgabeeinheit

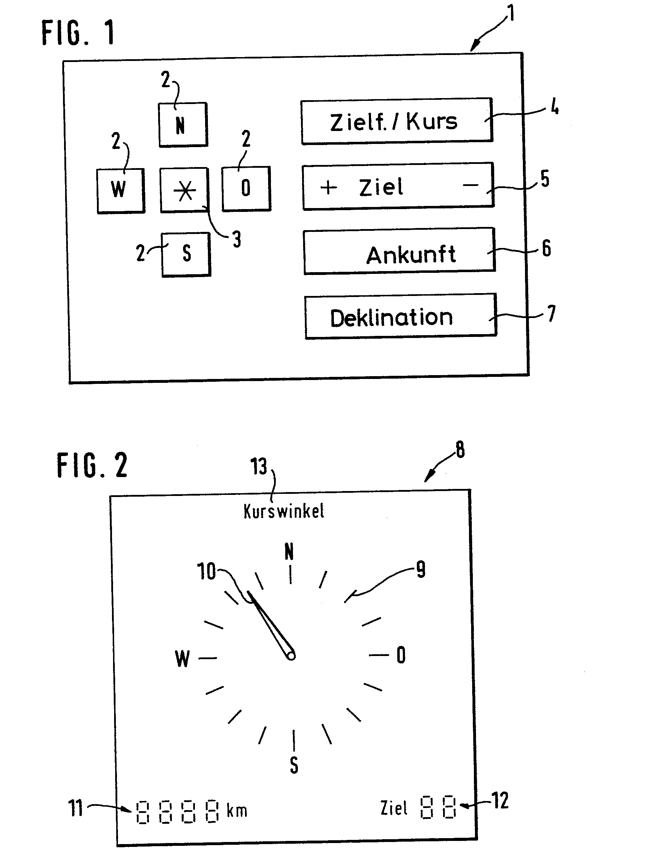

Die in Figur 1 dargestellte Eingabeeinheit 1 besitzt vier windrosenartig zueinander angeordnete Richtungstasten 2, die je einer Haupthimmelsrichtung zugeordnet sind.

In der Mitte zwischen den Richtungstasten 2 befindet sich eine Beschleunigungstaste 3.

0130290

Auf der rechten Seite der Eingabeeinheit 1 sind untereinander angeordnet eine Umschalttaste 4, eine Zielwähltaste 5 , eine Korrekturtaste 6 sowie eine Deklinationstaste 7.

Die in Figur 2 dargestellte Ausgabeeinrichtung 8 weist
eine als Windrose ausgestaltete 360°-Richtungsanzeige 9
auf, bei der die Bezeichnungen der Haupthimmelsrichtungen
unabhängig voneinander leuchtend ansteuerbar sind. Weiterhin besitzt die Richtungsanzeige 9 einen umlaufend anzeigenden Zeiger 10.

Eine Digitalanzeige 11 dient zur Anzeige von Beträgen in
Form von Zahlenwerten.

Eine weitere zweistellige digitale Zielanzeige 12 dient
zur Angabe des Ziels von maximal neunundneunzig speicherbaren Zielen, dessen Koordinaten momentan die Navigationseinrichtung aktiv ansteuernd geschaltet sind.

Zum Anwählen des jeweils gewünschten und durch eine zweistellige Zahl identifizierten Ziels dient die als Schwingtaste ausgebildete Zielwähltaste 5,bei deren Betätigung
die Zielanzeige 12 im scroll-modus-Verfahren umschaltet.
Bei Loslassen der Zielwähltaste 5 bleibt die Zielanzeige
12 in ihrer gerade anzeigenden Stellung stehen. Das durch
die angezeigte Zahl identifizierte Ziel ist nun für die
Navigationseinrichtung aktiv geschaltet.

Die Vielzahl an Zielen ist vorher bereits fest eingegeben
worden.

Mit den Richtungstasten 2 sind ebenfalls im scroll-modus-
Verfahren die relativen Zielkoordinaten eines bestimmten
nicht gespeicherten Fahrziels in bezug auf einen bestimmten Ausgangspunkt in die Navigationseinrichtung eingebbar. Die Beträge dieser Zielkoordinaten werden vorher z.B. mittels Lineal auf einer Landkarte ermittelt.

Durch Drücken der Nord-Taste erscheint an der Digitalanzeige 9 der momentan gespeicherte Betrag der Y-Achse in Nordrichtung. Nach einer Verzögerung von z.B.3 Sekunden die gleichzeitig zur Kontrolle gespeicherterBeträge nutzbar ist, setzt der scroll-modus ein und die Beträge laufen hoch.

Möchte man das Hochlaufen beschleunigen, so drückt man zusätzlich die Beschleunigungstaste 3. Wird der gewünschte Betrag erreicht, muß nur noch die Betätigung der Nord-Taste beendet werden. Soll der in Nordrichtung einzugebende Betrag gegenüber dem momentan gespeicherten Betrag verringert werden, so wird die Süd-Taste gedrückt.

Nach dem gleichen Prinzip erfolgt auch die Eingabe der Koordinate des gewünschten Ostwertes.

Gleichzeitig mit der Betätigung einer der vier Richtungstasten 2, leuchtet die entsprechende Bezeichnung an der Richtungsanzeige 9 auf und es stellt sich auch der Zeiger 10 auf die entsprechende Himmelsrichtung ein. Damit kann während der Koordinateneingabe an der Digitalanzeige 11 der Betrag und an der Richtungsanzeige 9 die dazugehörende Himmelsrichtung abgelesen werden.

Etwa 10 Sekunden nach dem Ende der Koordinateneingabe schaltet die Ausgabeeinheit 8 selbsttätig wieder auf den Zielvektor zurück, wobei der Zeiger 10 in die von der Himmelsrichtung unabhängige Richtung zum anzufahrenden Ziel zeigt und die Digitalanzeige 11 die Luftlinienentfernung zu diesem Ziel angibt.

Will man die Koordinatenbeträge auf 0 setzen, braucht man nur zwei der Richtungstasten 2 gleichzeitg betätigen.

Hat man eines der fest gespeicherten Ziele erreicht und stellt fest, daß trotzdem die Digitalanzeige 9 als Luftlinienentfernung noch nicht 0 erreicht hat, so wird dieser Navigationsfehler durch Drücken der Korrekturtaste 6 korrigiert. Das nächste der fest eingespeicherten Ziele wird so wieder von korrekten Ausgangskoordinaten ausgehend angesteuert.

Da die Deklinationsabweichung des magnetischen Erdfelds nicht überall gleich ist, kann zur entsprechend korrigierenden Beeinflussung der Richtung des Zielvektors der Deklinationswinkel eingestellt werden. Dies erfolgt durch Drücken der Deklinationstaste 7. Dabei erscheint an der Digitalanzeige 11 der momentan eingestellte Winkelbetrag. Nach z.B. 3 Sekunden beginnt dieser Betrag sich im scollmodus-Verfahren zu ändern. Bei Erreichen des gewünschten Betrages muß nur noch die Betätigung der Deklinationstaste 7 beendet werden. Nach 10 Sekunden erfolgt wieder selbsttätig die Umschaltung auf den Zielvektor.

Um Feststellen zu können, in welche Richtung,bezogen auf die Himmelsrichtungen,sich das Fahrzeug momentan bewegt, betätigt man die Umschalttaste 4. Nun zeigt der Zeiger 10 in die Himmelsrichtung, in die das Fahrzeug gerade fährt. Gleichzeitig leuchtet der Schriftzug 13 "Kurswinkel" auf. Zum Zurückschalten auf den Zielvektor muß die Umschalttaste 4 nun ein zweites Mal betätigt werden.

Mit einer Eingabeeinheit 1 , die nur wenige Tasten aufweist und mit einer in einer Vielfachfunktion arbeitenden,leicht erfaßbaren Ausgabeeinrichtung 8, ist es möglich, optimale Navigationsinformationen zu erhalten.

Es versteht sich, daß die Eingabeeinheit 1 anstatt mit Tasten auch mit jeder anderen Art von Eingabeelementen ausgestattet sein kann. Insbesondere ist es möglich, die Tasten durch mit einem Lichtgriffel optisch lesbare Informationen wie Barcodes zu ersetzen.

Die bei Betätigung einer Richtungstaste 2 die entsprechende Himmelsrichtung anzeigende Richtungsanzeige 9 kann bei z.B. Betätigung der Nord-Taste auch Süden anzeigen, wenn die Werte der Y-Koordinaten nicht Pluswerte sondern Minuswerte sind.

VDO Adolf Schindling AG    - 1 -    Gräfstraße 103
6000 Frankfurt/Main

G-R Kl-do
1713
19. Mai 1983

## Patentansprüche

1. Navigationseinrichtung für Fahrzeuge, insbesondere für Straßenfahrzeuge, mit einer Eingabeeinheit zur Eingabe von Eingabedaten, über die ein bestimmtes Fahrziel mit seinen relativen Zielkoordinaten gegenüber dem Ausgangsort des Fahrzeugs eingebbar und zur Bildung eines Zielvektors auswertbar ist, und mit einer Ausgabeeinrichtung, durch die der momentan jeweils gültige Zielvektor nach Betrag und Richtung anzeigbar ist, dadurch gekennzeichnet, daß in die Eingabeeinheit (1) eingegebene Eingabedaten von der Ausgabeeinrichtung (8) anzeigbar sind.

2. Navigationseinrichtung nach Anspruch 1, dadurch gekennzeichnet, daß die Eingabedaten während der Dateneingabe anzeigbar sind.

3. Navigationseinrichtung nach einem der vorhergehenden Ansprüche, dadurch gekennzeichnet, daß die Eingabedaten auf Abruf anzeigbar sind.

4. Navigationseinrichtung nach einem der vorhergehenden Ansprüche, dadurch gekennzeichnet, daß die Beträge der Eingabedaten von einer Digitalanzeige (11) anzeigbar sind.

5. Navigationseinrichtung nach Anspruch 4, dadurch gekennzeichnet, daß die Beträge der Eingabedaten und der Betrag des Zielvektors durch dieselbe Digitalanzeige (11) anzeigbar sind.

6. Navigationseinrichtung nach einem der vorhergehenden Ansprüche, dadurch gekennzeichnet, daß die Richtungen der Eingabedaten von einer 360°-Richtungsanzeige (9) anzeigbar sind.

7. Navigationseinrichtung nach Anspruch 6, dadurch gekennzeichnet, daß die Richtungen der Eingabedaten und die Richtung des Zielvektors durch dieselbe 360°-Richtungsanzeige (9) anzeigbar sind.

8. Navigationseinrichtung nach Anspruch 5, dadurch gekennzeichnet, daß als Eingabedaten die Beträge der Zielkoordinaten und/oder der Deklinationswinkel anzeigbar sind.

9. Navigationseinrichtung nach Anspruch 5, dadurch gekennzeichnet, daß durch die Digitalanzeige (11) die momentanen Koordinatenwerte anzeigbar sind.

10. Navigationseinrichtung nach Anspruch 6, dadurch gekennzeichnet, daß als Eingabedaten die Richtungen der Zielkoordinaten und/oder der Deklinationswinkel anzeigbar sind.

11. Navigationseinrichtung nach Anspruch 10, <u>dadurch gekennzeichnet</u>, daß durch die 360°-Richtungsanzeige (9) die momentane Fahrtrichtung anzeigbar ist.

12. Navigationseinrichtung nach einem der vorhergehenden Ansprüche, <u>dadurch gekennzeichnet</u>, daß die Eingabedaten im scroll-modus-Verfahren in die Eingabeeinheit (1) eingebbar und von der Ausgabeeinrichtung (8) anzeigbar sind.

13. Navigationseinrichtung nach Anspruch 12, <u>dadurch gekennzeichnet</u>, daß die Eingabeeinheit 4 den Haupthimmelsrichtungen zugeordnete Richtungstasten (2) aufweist, durch die der Betrag der jeweils zugeordneten Koordinate eingebbar ist.

14. Navigationseinrichtung nach Anspruch 13, <u>dadurch gekennzeichnet</u>, daß die Richtungstasten (2) windrosenartig zueinander angeordnet sind.

15. Navigationseinrichtung nach Anspruch 13, <u>dadurch gekennzeichnet</u>, daß durch Betätigung einer Richtungstaste (2) die entsprechende Himmelsrichtung der Richtungsanzeige (9) anzeigbar ist.

16. Navigationseinrichtung nach Anspruch 13, <u>dadurch gekennzeichnet</u>, daß bei Betätigung einer Richtungstaste (2) der entsprechende momentane Koordinatenbetrag von der Ausgabeeinrichtung (8) anzeigbar und nach einer bestimmten Zeit die scroll-modus-Einrichtung einschaltbar ist.

17. Navigationseinrichtung nach einem der vorhergehenden Ansprüche, <u>dadurch gekennzeichnet</u>, daß die Eingabeeinheit (1) eine Löschtaste zum Löschen der Eingabedaten aufweist.

18. Navigationseinrichtung nach Anspruch 17, dadurch gekennzeichnet, daß die Löschtaste durch zwei gleichzeitig betätigte Richtungstasten (2) gebildet ist.

19. Navigationseinrichtung nach einem der vorhergehenden
Ansprüche, dadurch gekennzeichnet, daß die Eingabeeinheit (1) eine Deklinationstaste (7) aufweist, durch
die der Deklinationswinkel einstellbar ist.

20. Navigationseinrichtung nach Anspruch 19, dadurch gekennzeichnet, daß bei Betätigung der Deklinationstaste (7) der momentan eingestellte Deklinationswinkel von der Ausgabeeinrichtung (8) anzeigbar und
nach einer bestimmten Zeit die scroll-modus-Einrichtung
umschaltbar ist.

21. Navigationseinrichtung nach einem der vorhergehenden
Ansprüche, dadurch gekennzeichnet, daß nach Beendigung
der Betätigung der Richtungstaste (2) und/oder der
Deklinationstaste (7) die Anzeigeeinrichtung (8)
selbsttätig auf die Anzeige des Zielvektors umschaltbar ist.

22. Navigationseinrichtung nach einem der vorhergehenden
Ansprüche, dadurch gekennzeichnet, daß die Eingabeeinheit (1) eine Korrekturtaste (6) aufweist, durch
die die Momentankoordinaten von den Zielkoordinaten
ersetzbar sind.

23. Navigationseinrichtungen nach einem der vorhergehenden
Ansprüche, dadurch gekennzeichnet, daß die Eingabeeinheit (1) eine Umschalttaste (4) aufweist, durch die
die Richtungsanzeige (9) vom Zielvektor auf die momentane Fahrtrichtung und umgekehrt umschaltbar ist.

**FIG. 1**

1

| 2 | | | 4 |
| N | | Zielf./ Kurs | |

| 2 | 2 | | 5 |
| W | ✳ | 0 | + Ziel − |

3

2 S

| | 6 |
| Ankunft | |

| | 7 |
| Deklination | |

**FIG. 2**

8

13 Kurswinkel

N

10

9

W — — 0

S

11 ▯▯▯▯ km

Ziel ▯▯ 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | EP-A-0 027 232 (SIEMENS AG)<br><br>* Patentansprüche 1-3; Figur 2; Seite 5, Absatz 3; Seite 6, Zeile 16 *<br><br>--- | 1,5-7, 11,17 | G 01 C 21/22<br>G 09 B 29/10 |
| Y | DE-A-3 222 285 (TOYOTA JIDOSHA KOGYO KK)<br>* Figur 2; Seite 6, Absatz 3; Seite 9, Zeilen 23-34 *<br><br>--- | 1,5 | |
| A | DE-A-3 006 141 (M. RENNINGS)<br>* Seite 24 *<br><br>--- | 1-3 | |
| A | FR-A-2 448 202 (P.J.P. FLEISCHMANN et al.)<br><br>--- | | |
| A | DE-A-2 910 386 (TELDIX GMBH)<br><br>----- | | RECHERCHIERTE SACHGEBIETE (Int. Cl. ³)<br><br>G 05 D 1/02<br>G 01 C 21/00<br>G 09 B 29/00 |

Der vorliegende Recherchenbericht wurde für alle Patentansprüche erstellt.

| Recherchenort BERLIN | Abschlußdatum der Recherche 21-08-1984 | Prüfer BEYER F |
|---|---|---|